Europäisches Patentamt

**(19)** European Patent Office

Office européen des brevets

**(11)** **EP 0 617 894 B1**

**(12)** **EUROPEAN PATENT SPECIFICATION**

**(45)** Date of publication and mention
of the grant of the patent:
**16.12.1998 Bulletin 1998/51**

**(51)** Int. Cl.$^6$: **A01N 57/20**
// (A01N57/20, 37:48, 25:04,
25:02)

**(21)** Application number: **94870059.6**

**(22)** Date of filing: **01.04.1994**

**(54)** **Liquid concentrated herbicidal glyphosate compositions**

Flüssige konzentrierte herbizide Glyphosatzusammensetzungen

Compositions herbicides de glyphosate sous forme de concentrés liquides

**(84)** Designated Contracting States:
**AT BE CH DE DK ES FR GB GR IE IT LI NL PT SE**

**(30)** Priority: **02.04.1993 EP 93870063**

**(43)** Date of publication of application:
**05.10.1994 Bulletin 1994/40**

**(73)** Proprietor:
**MONSANTO EUROPE S.A./N.V.**
**B-1150 Brussels (BE)**

**(72)** Inventors:
• **Sato, Tatsuo**
**Chofu, Tokyo 182 (JP)**
• **Khan, Shuaib Ahmad**
**B-1160 Brussels (BE)**

• **Mitchell, Robert William**
**B-1900 Overijse (BE)**

**(74)** Representative:
**Bosch, Henry et al**
**Monsanto Services International S.A.**
**Patent Department**
**Avenue de Tervuren 270/272**
**Letter Box No. 1**
**1150 Brussels (BE)**

**(56)** References cited:
**EP-A- 0 143 547**     **EP-A- 0 146 238**
**EP-A- 0 192 583**     **EP-A- 0 334 041**
**EP-A- 0 379 852**     **EP-A- 0 448 538**
**WO-A-84/03607**     **WO-A-89/03641**
**DE-A- 4 013 930**     **GB-A- 2 267 825**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Xerox (UK) Business Services
2.16.6/3.4

## Description

The present invention is concerned with concentrated liquid herbicidal compositions comprising glyphosate herbicide and at least a co-herbicide other than glyphosate, essentially insoluble in water, more particularly a diphenyl ether type of herbicide.

Glyphosate (N-phosphonomethylglycine) is a widely used non-selective, highly effective herbicide. Glyphosate herbicide is normally provided as a water soluble salt, preferably the isopropylamine salt of glyphosate. Liquid concentrated formulations intended to be diluted in a spray tank at farmer's level, generally contain in addition to the glyphosate salt, a surfactant or a surfactant mixture which increases the biological effect of the glyphosate herbicide.

Numerous studies have been made on the effect of surfactants on the herbicidal action of glyphosate. Wyrill and Burnside, Weed Science, Vol. 25 (1977), 275-287, for instance studied the effects of many different surfactants including examples from different classes of surfactant. Some classes of surfactant were more effective than others in enhancing the herbicidal effect of glyphosate (used as a solution of the isopropylamine salt). Wyrill and Burnside concluded that an effective surfactant is an important component of any glyphosate spray formulation. The authors also mention that "effectiveness of surfactant combinations is quite variable and difficult to predict - therefore, the indiscriminate addition of surfactants or wetting agents to glyphosate sprays which already contain a surfactant should be avoided".

Glyphosate herbicide is known to act rapidly and effectively but to show visual symptoms at a relatively late stage. It has already been suggested in the art to apply glyphosate herbicide in combination with diphenyl ether type of herbicides essentially in order to accelerate the appearance of visual symptoms.

WO-A-84/03607 equivalent to EP-A-0 138 945 discloses a herbicidal composition comprising a glyphosate type herbicide and an acifluorfen type herbicide. Page 3 contains a broad statement that small amounts of acifluorfen, or its salts, added to glyphosate substantially enhance the speed of phytotoxicity. On pages 11-12, concentrate formulations are described in a very general manner.

Similarly, EP-A-0 143 547 discloses a herbicidal composition containing glyphosate herbicide and an oxyfluorfen type herbicide.

EP-A-0 340 583 is related to herbicidal compositions comprising a glyphosate type herbicide (N-(phosphonomethylglycil)sulfonylamine) and a herbicide selected within a group containing i.a. phenoxybenzoic type herbicides.

EP-A-0 340 216 (WO 89/03641) discloses a composition of herbicides comprising at least one glyphosate type herbicide and a phenoxybenzoic-type herbicide, the weight ratio phenoxybenzoic-type herbicide/glyphosate type herbicide being comprised between 1/12 and 1/80.

None of the above prior art references teaches how to formulate liquid, concentrated compositions comprising glyphosate herbicide and a diphenyl ether type of herbicide according to the present invention.

More recently, EP-A-0 448 538 and EP-A-0 394 211 in its Example 12 disclose a process for the preparation of a solid formulation comprising N-phosphonomethylglycine or a water-soluble salt thereof and oxyfluorfen. According to EP-0 448 538 a liquid premix comprising oxyfluorfen, at least one surfactant, and water or solvents is prepared at a temperature of from 50°C to 80°C, thus dissolving oxyfluorfen, and a second premix comprising N-phosphonomethylglycine or a water soluble salt thereof, an acid acceptor if appropriate and preground ammonium sulfate is formed, and both premixes are combined to form an extrudable composition, which is extruded and optionally dried.

Different types of liquid formulated combinations of glyphosate herbicide and co-herbicide have already been suggested in the prior art.

EP-A-0 244 754 discloses reportedly stable emulsions of aqueous herbicidal solutions (e.g. of a glyphosate salt) with organic solutions of active material and selected surfactant mixes. The examples disclose emulsions of glyphosate herbicide/metolachlor and glyphosate herbicide/linuron. In the examples, the loading of active material such as glyphosate, is rather low (3.3 and 5.0 % w/w) in the formulated product. Emulsions, moreover, are known to tend to cream and break, and a formulation that has undergone these processes may give poor results when actually sprayed on plants. Further, emulsions are generally opaque or milky and thus do not always constitute a desirable formulated commercial product; they often require shaking before using.

GB-A-2 103 487 discloses a water dispersible emulsion composition which contains as the active ingredient a water-soluble herbicide, e.g. the IPA-salt of glyphosate, combined with a water-insoluble 2-haloacetanilide herbicide, like alachlor. Again, the glyphosate loading is below 35% w/w of a 62% solution of IPA-salt of glyphosate (approx. 16% a.e.) the solvent content and the emulsion type formulation are not always considered optimum from a commercial point of view.

JP-1 203 302 discloses an agricultural ready-to-use composition comprising 0.5 - 10 % by weight of water insoluble organic solvent of specific gravity less than one, 0.1 - 1 % by weight of nonionic surfactant of HLB 10 or less optionally containing 30 % by weight or less of oil soluble anionic surfactant, 0.01 - 1 % by weight of a powdery or oily agricultural chemical, and at least 90 % by weight of water. The composition is used as it is by forming a suspension without addition of water. The content of agricultural chemical in the formulation is rather low.

WO 90/07277 discloses a herbicidal emulsion composition comprising a herbicidally effective amount of an oxadiazolone herbicide, an aromatic solvent in an amount sufficient to dissolve the oxadiazolone herbicide, a herbicidally effective amount of N-phosphonomethylglycine, water in an amount sufficient to dissolve the N-phosphonomethylglycine, an emulsifying agent in an amount sufficient to render the emulsion stable, and optionally a polymeric thickening agent in an amount sufficient to thicken the composition such that at 25°C the time elapsed for 100 ml of the composition to pass through a measurement orifice of a Ford B2 Cup is in the range of about 20-125 seconds. The content of glyphosate herbicide is rather low and the formulation disclosed requires a relatively large amount of organic solvent said to be preferably between 30 and 70 percent by weight of the composition.

EP-A-0 243 872 discloses pesticidal concentrate compositions comprising 1-55% by weight of a pesticidal component e.g. glyphosate in a finely ground and wholly or partially salted form, suspended in 10-90% by weight of an oily component, and comprising 1-50% by weight of a surfactant component, calculated on the total composition. This document does not teach how to include co-herbicides. Further it requires the glyphosate herbicide to be in a finely ground form, which is an expensive way of using glyphosate herbicide. The formulation disclosed also requires the presence of stabilizing agents.

EP-A-0 297 305 relates to aqueous herbicidal dispersions in combination with water-soluble plant protecting agents, comprising at least two actives in disperse form, at least one water-soluble herbicidally active ingredient and an appropriate surfactant mixture. Diphenyl ethers like oxyfluorfen are cited as examples of dispersible material and glyphosate herbicide is cited as example of water soluble material. The specified surfactant mixture is said to apply as well for compositions comprising only one active material in dispersed form and one active material in soluble form. In the examples, the glyphosate loading is only 6 or 8 % by weight. Furthermore, the dispersed form of active materials does not represent the most efficient form for application to plants, particularly in the case of systemic pesticides.

WO 91/14365 discloses that the systemic activity of glyphosate and other sprayed foliar systemic compositions may be improved by dissolving a substantially water soluble polymer in the spray solution. The polymer is generally introduced as a reverse phase dispersion. This document does not teach how to combine in an efficient manner glyphosate herbicide and a co-herbicide.

DE-A-40 13 930 discloses in its example 4 a concentrate composition that comprises glyphosate and acifluorfen which is a diphenyl ether herbicide, surfactant, polypropylene glycol and water. Such document discloses a liquid suspension of glyphosate comprising a rather low glyphosate loading, part of it being in a form insoluble in the medium of the composition and requiring milling. It is generally not desirable to formulate a water soluble herbicide as a suspension.

EP-A-0 334 041 discloses herbicidal compositions comprising a specific diphenylether herbicide and glyphosate. Formulation Example 1 of such prior art reference discloses an emulsifiable concentrate composition that comprises specific surfactants such as polyoxyethylene styrylphenyl ether and sodium alkylbenzenesulfonate.

GB-2 267 825 has been filed prior to the priority date of the present patent application but published thereafter. It discloses herbicide microemulsion concentrate compositions comprising fluroxypyr or triclopyr, which are water-insoluble herbicides, combined with a water soluble salt of glyphosate, together with at least one amine ethoxylate containing 2 to 5 moles of ethylene oxide, at least one amine ethoxylate surfactant containing 8 to 20 moles of ethylene, and at least one cosurfactant.

There is still a need to provide a commercially acceptable concentrated liquid composition of the microemulsion or micellar solution type comprising N-phosphonomethylglycine or a salt thereof and at least one co-herbicide of the diphenyl ether type. The composition should be stable on storage, according to standards applicable to stable liquid formulations, and easy to use.

One object of the present invention is to provide a concentrated transparent liquid composition of the microemulsion or micellar solution type comprising a glyphosate herbicide and a diphenyl ether type co-herbicide, having a high content of glyphosate-type herbicide, more specifically a content of higher than 15% by weight, preferably more than 20% by weight acid equivalent based on the total composition.

Another object of the present invention is to provide a liquid concentrated composition as defined above that does not contain a high level of organic solvent, more especially one having a solvent content of less than 10% by weight of the total composition.

Still another object of the present invention is to provide a cost-effective composition of glyphosate herbicide and co-herbicide of the diphenyl ether type which shows a very good biological performance.

Another object of the present invention is to provide a liquid concentrated composition of the microemulsion or micellar solution type, comprising N-phosphonomethylglycine or a salt thereof and at least one co-herbicide of the diphenyl ether type that does not show the drawbacks of the prior art herbicidal glyphosate compositions.

Still another object of the present invention is to provide a simple process for the preparation of a composition of the invention.

According to the present invention, the liquid concentrate herbicidal composition comprises

- at least about 15% by weight based on the total composition of N-phosphonomethylglycine or of a salt thereof or of a mixture of salts thereof (calculated as acid equivalent);
- a water-insoluble diphenyl ether type of herbicide in the ratio by weight of N-phosphonomethylglycine a.e./diphenyl ether of from 10/1 to 100/1;
- 5 to 25% by weight of a surface active component comprising a mixture of an alkoxylated fatty amine with a surfactant chemically different from the alkoxylated fatty amine;
- 0 - 10% by weight (of total composition) of solvent, the surface active component optionally with an admixture of the solvent being capable of dissolving the diphenyl ether herbicide; and
- 1 to 25% by weight of a compatibility agent.
- water to total 100 %

Diphenyl ether type of herbicides is meant to include diphenyl ether herbicides, their equivalents, metabolites, salts, esters and derivatives. Diphenyl ether herbicides are known by the skilled person and are meant to include compounds that have two generally substituted phenyl rings linked by an oxygen. The phenyl ethers are commonly used pre- and post emergent of the crop to control annual broad-leaf weeds and a few types of annual grasses. They have been classified into two groups, primarily based on distinct differences in ring substitution and light requirement for herbicidal activity : one group, with substitutions at the 2,4- or the 2,4,6-positions, the other group, with substitutions at the 3- or 3,5- positions. Known herbicides pertaining to the group of diphenyl ethers are : nitrofen, aclonifen, acifluorfen, acifluorfen-sodium, acifluorfen-potassium, lactofen, fluorodifen, bifenox, chlomethoxyfen, oxyfluorfen, fluoroglycofen, fluoroglycofen-ethyl, fomesafen, 5-[2-chloro-4-(trifluoromethyl)phenoxy]-2-nitroacetophenone oxime-$o$-(acetic acid, methyl ester) also known as DPE I, and 5-(2-chloro-4-trifluoromethylphenoxy)-2-nitro-$\alpha$-methoxyacetophenone oxime-$o$-(acetic acid, methyl ester) also known as AKH-7088.

In the context of the present invention, the term "solvent" includes any organic solvent or mixtures thereof which can not be characterized as a surfactant by one skilled in the art. Suitable solvents may easily be selected by the skilled person amongst commercially available solvents. A good reference for selecting solvents is the "Industrial solvents Handbook", Second Edition, by Ibert Mellan, Noyes Data Company, which is said to be helpful when it becomes necessary to select a new solvent on a competitive or comparative basis, especially when the solvent employed hitherto, can no longer be used because of environmental reasons,....etc. Solvents may be selected from hydrocarbon solvents, like paraffins, cycloparaffins, olefins, cycloolefins, aromatics or terpenes, halogenated hydrocarbons, nitroparaffins, organic sulfur compounds, aldehydes, ethers, ketones, acids, amines, like alkylamines, alkylene diamines, alkanol amines, aryl amines, imines, amides, nitriles and heterocyclic compounds, esters, like formates, acetates, propionates, acrylates or methacrylates, oxalates, benzoates, carbonates, phthalates, phosphates or phosphites, oxygenated hydrocarbons and silicates.

Preferred compatibility agents are monohydric alcohols, polyhydric alcohols, polyglycols, like isopropanol, diethylene glycol (DEG), dipropylene glycol (DPG), monopropylene glycol (MPG) and low molecular weight (up to 500) polypropylene glycols (PPG). Glycol ethers, such as 1-methoxy-2-propanol and dipropyleneglycol monoether are also preferred. Butoxyethoxyethenol, such as 2-(2-n-butoxyethoxy)-ethenol, also known as butyl carbitol, is also considered as a compatibility agent according to the spirit of the present disclosure.

The microemulsion or micellar solution according to the present invention contains water. Part of the water content may be due to the presence of water in commercial surfactants or surfactant mixtures and to the solution of glyphosate salt; additional water may be required in order to form the microemulsion or micellar solution.

According to a preferred embodiment, the composition of the invention comprises at least 20% by weight (of total composition) of N-phosphonomethylglycine or of a salt thereof or of a mixture of salts thereof (calculated as acid equivalent). A preferred salt may be the isopropylamine salt of glyphosate or normal propylamine salt of glyphosate. Other preferred salts are the ammonium salt or sodium salt.

As mentioned above the ratio glyphosate acid equivalent to diphenyl ether is of from 10/1 to 100/1; in a preferred composition said ratio is 18/1; in another preferred composition, it is 48/1 or 72/1.

Suitable surfactants may be selected amongst commercially available agriculturally acceptable surfactants. A good reference for selecting surfactants is "McCutcheon's Detergents and emulsifiers Annual", Mc Publishing Corp, Ridgewood, new Jersey or equivalent technical documents. It is to be noted that commercial surfactants may comprise one or more individual surface active materials and possibly some water or solvent. The conditions, the surfactant mix (surface active component) and the solvent must fulfill are that the diphenyl ether herbicide dissolves in the surface active component optionally in admixture with the solvent and that such a solution is stable during a sufficient period of time to impart the required stability proportion to the final formulation according to conventional standards.

Suitable surface active materials in addition to the alkoxylated amine surfactant, may include but are not limited to alkyl benzene sulfonates and alkyl naphthalene sulfonates, sulfated fatty alcohols, amines or acid amides, amine oxides, esters of sodium sulfosuccinate, sulfated or sulfonated fatty acid esters, petroleum sulfonates, sulfonated vegetable oils, ditertiary acetylenic glycols, polyoxyethylene derivatives of alkylphenols (particularly isooctylphenol and nonylphenol) and polyoxyethylene derivatives of the monohigher fatty acid esters of hexitol anhydrides (e.g., sorbitan), alkoxylated quaternary ammonium surfactants, alkylpolyglycosides, alkoxylated alcohol surfactants, alkoxylated fatty acid ester, sucrose esters possibly alkoxylated, silicon based surfactants.

According to a preferred embodiment, the surfactant component is a mixture of an alkoxylated fatty amine and of an optionally alkoxylated quaternary ammonium salt. A suitable surfactant is alkyl dimethyl benzyl ammonium chloride, such as the commercial surfactant known as Dodigen 226 (tradename).

The composition of the present invention is a clear or translucent liquid concentrate such as a microemulsion or micellar solution, which does not present the properties of traditional opaque emulsions.

The liquid composition of the present invention may be prepared by a process comprising the steps of :

(a) preparing a solution of the diphenyl ether herbicide in a surface active component at a temperature in the range of from 20 to 80°C;
(b) adding the solvent and optionally at least part of the compatibility agent and homogenizing the solution;
(c) adding N-phosphonomethylglycine or a salt thereof, optionally in aqueous solution, and
(d) adding the rest of the compatibility agent, by agitating the resulting mixture and if appropriate allowing it to cool ; or alternatively
(a') preparing a solution of the diphenyl ether herbicide in the surface active component at a temperature in the range of from 20 to 80°C;
(b') adding at least part of a compatibility agent and homogenizing the resulting mixture;
(c') adding N-phosphonomethylglycine or a salt thereof, optionally in aqueous solution, and
(d') optionally adding the rest of the compatibility agent by agitating the resulting mixture and if appropriate allowing it to cool; or alternatively
(a'') preparing a solution of the diphenyl ether herbicide in the solvent or in a mixture of solvent and at least part of the surface active component, at approximately ambient temperature;
(b'') optionally adding the surface active component or part thereof, as appropriate, and at least part of the compatibility agent and homogenizing the resulting mixture;
(c'') adding N-phosphonomethylglycine or a salt thereof, optionally as an aqueous solution, and
(d'') optionally adding the rest of the compatibility agent by agitating the resulting mixture.

The solution of diphenyl ether herbicide may be prepared by mixing the surfactant(s) with molten diphenyl ether herbicide or stirring the diphenyl ether herbicide in the surfactant mixture, optionally at elevated temperature. In the alternative, the solution may be prepared by admixing solvent, optionally the surfactant component or part thereof, and diphenyl ether at ambient temperature.

The glyphosate herbicide may be incorporated into the formulated product as the glyphosate acid or as a salt thereof, preferably the isopropylamine salt, or as a mixture of different salts. One may also combine glyphosate in its acid form with a suitable acid acceptor known in the art, such as ammonia, ammonium acetate, ammonium carbonate, ammonium bicarbonate, sodium acetate, potassium acetate, sodium bicarbonate, sodium carbonate, sodium metaborate, sodium citrate, tetrasodium EDTA, sodium formate, sodium hydroxide, sodium oxalate, trisodium phosphate, tripotassium phosphate, sodium propionate, sodium pyrophosphate, sodium metasilicate, sodium orthosilicate, sodium sulfite, sodium thiosulfate, sodium tetraborate, dipotassium phosphate, diammonium phosphate; sodium tripolyphosphate, sodium metaphosphate, ammonium and potassium salts thereof, mixtures thereof and the like but more preferably the acid acceptor is selected from ammonium bicarbonate, sodium bicarbonate, diammonium phosphate, disodium phosphate and mixtures thereof. The acid and the acid acceptor may be allowed to react in situ thus providing the required thermic energy for the preparation of the diphenyl ether solution in surfactant.

According to another aspect of the present invention, a method of use of the liquid composition described above is concerned. The exact amount of herbicide containing N-phosphonomethyl and diphenyl ether herbicide as the active ingredients to be employed is dependent upon the response desired in the plant, as well as such other factors as the plant species and the stage of development thereof, the amount of rainfall, as well as the specific composition employed. In foliar treatment for the control of vegetative growth, the active ingredients may be applied in amounts from about 0.05 to about 4 kg or more per hectare. An effective amount for phytotoxic or herbicidal control is that amount necessary for overall or selective control, i.e. a phytotoxic or herbicidal amount. It is believed that one skilled in the art can readily determine from the teachings of this specification the approximate application rate. The liquid formulation has first to be diluted in a water tank at the appropriate concentration, and the spray dilution may then be sprayed at the appropriate rate on the plants to be treated.

It has to be pointed out that the liquid formulation of this invention where the diphenyl ether type of co-herbicide is in a solution of surfactant and solvent, eventually forms a clear or translucent solution when diluted with water in the spray tank. Whilst e.g. the fluoroglycofen ethyl herbicide is sold as a fine water dispersible powder (wettable powder), the composition of the present invention allows a finer particle size for the fluoroglycofen-ethyl active ingredient in the spray dilution. While it was previously thought (e.g. EP-0 503 869) that oxyfluorfen, for instance, had to be milled before incorporation into an appropriate formulation, the present invention provides a liquid formulation comprising oxyfluorfen in a dissolved form, thus in the finest particle size suitable for a contact herbicide.

The following examples are presented to illustrate the present invention, as well as some of the various embodiments of the invention. These examples are presented as being illustrative of the novel formulations, process for preparing the formulations and herbicidal use thereof. All percentages in the following examples are on a weight basis unless otherwise indicated.

### EXAMPLE 1

A mixture of 50 parts Genamin CO20 (an ethoxylated (2EO)cocoamine surfactant) and 50 parts Prapagen WKT (a ditallow dimethyl ammonium chloride surfactant) was used to prepare a surfactant mix used in several following examples.

A solution of 1.85 parts by weight of oxyfluorfen (min. 95% technical material from Rohm & Haas Company) in 12 parts of the surfactant mix described above was prepared at approximately 50°C. Thereafter, 8.15 parts of cyclohexanone were added and the solution was still homogenized. 67.00 parts of a 62% solution of glyphosate isopropylamine salt were then incorporated into the solution and the compatibility agent (11.00 parts of DPG) was added under agitation. The mixture has been allowed to cool at room temperature.

The liquid concentrate composition was stable at least above 5°C.

### EXAMPLE 2

The same procedure as described in Example 1 was followed, but in this Example the solvent content was reduced. A satisfactorily stable liquid composition was obtained having the following ingredients :

| | |
|---|---|
| IPA salt of glyphosate (62% solution) | 67.00 (30.74 a.e.) |
| Oxyfluorfen (min. 95% active ingredient) | 1.85 |
| Surfactant mix of Example 1 | 15.50 |
| Cyclohexanone (solvent) | 7.65 |
| DPG (compatibility agent) | 8.00 |
| | $\overline{100.000}$ |

### EXAMPLE 3

A satisfactory attempt was made to further reduce the solvent content. A satisfactorily stable liquid composition having the following ingredients was obtained :

| | |
|---|---|
| IPA salt of glyphosate (62% solution) | 67.00 (30.74 a.e.) |
| Oxyfluorfen (min.95% active ingredient) | 1.85 |
| Surfactant mix of Example 1 | 15.50 |
| Cyclohexanone | 5.65 |
| DPG | 10.00 |
| | $\overline{100.00}$ |

### EXAMPLES 4 AND 5

The same procedure as in the previous Examples was followed. Stable satisfactory liquid compositions having the following ingredients were obtained :

| IPA glyphosate (62% solution) | 67.00 (30.74 a.e.) |
|---|---|
| Oxyfluorfen (min.95% active ingredient) | 1.85 |
| Surfactant mix of Example 1 | 24.20 |
| Cyclohexanone | 6.95 |
| DPG | - |
| | 100.00 |

| IPA glyphosate (62% solution) | 67.00 (30.74 a.e.) |
|---|---|
| Oxyfluorfen (min.95% active ingredient) | 1.85 |
| Surface active component of Example 1 | 19.20 |
| Cyclohexanone | 7.00 |
| DEG | 4.95 |
| | 100.00 |

**EXAMPLE 6 :**

In this instance, another surfactant mix was used, that is Genamin CO20, an ethoxylated (2EO) coco-amine surfactant and Empigen OB (an amine oxide surfactant).

The following liquid concentrate composition was stable :

| IPA salt of glyphosate (62% solution) | 60.00 (27.53 a.e.) |
|---|---|
| Oxyfluorfen (minimum 95% tech. material) | 1.70 |
| Genamin CO20 | 5.50 |
| Empigen OB | 10.00 |
| Cyclohexanone | 7.80 |
| DPG | 15.00 |
| | 100.00 |

**EXAMPLE 7 :**

The following liquid concentrate composition was obtained following essentially the procedure of the previous Examples except that no solvent, in the sense of the invention, was used.

| IPA salt of glyphosate (62% solution) | 59.00 (27.07 a.e.) |
|---|---|
| Oxyfluorfen (min. 95% technical mat.) | 1.55 |

(continued)

| | |
|---|---|
| Genamin CO20 | 12.00 |
| Prapagen WKT | 3.20 |
| DPG | 15.00 |
| Water | 9.25 |
| | 100.00 |

### EXAMPLE 8 :

The following stable liquid concentrate composition was obtained following essentially the procedure of the previous Examples. In this instance, the surfactant mix comprised Genamin CO20 surfactant and Dodigen 226 (cocoalkyldimethylbenzyl ammonium chloride) :

| | |
|---|---|
| IPA salt of glyphosate (62% solution) | 67.00 (30.74 a.e.) |
| Oxyfluorfen (min. 95% technical mat.) | 1.85 |
| Genamin CO20 | 7.70 |
| Dodigen 226 | 7.70 |
| Cyclohexanone | 5.75 |
| DPG | 10.00 |
| | 100.00 |

### EXAMPLE 9 :

The following stable concentrate composition was obtained following essentially the same procedure as previously described:

| | |
|---|---|
| IPA salt of glyphosate (62% solution) | 55.60 (25.50 a.e.) |
| Oxyfluorfen (min. 95% technical mat.) | 1.40 |
| Genamin T 200 NF | 10.00 |
| Empigen OB | 18.00 |
| Cyclohexanone | 5.00 |
| DPG | 10.00 |
| | 100.00 |

Genamin T200 NF contains an ethoxylated (15.EO) tallow amine surfactant.

### EXAMPLE 10 :

A mixture of 50 parts of Genamin CO20 (an exthoxylated (2EO) coco-amine surfactant) and 50 parts Prapagen WKT (a ditallow dimethyl ammonium chloride surfactant) was prepared to constitute a surfactant mix.

A solution of 2 parts of fluoroglycofen-ethyl (approx. 88% technical material) in 15 parts of the surfactant mix described above was prepared at approximately 65°C. Some DPG compatibility agent may be added at this point, still homogenizing the mixture. 67.00 parts of a 62% solution of glyphosate isopropylamine salt were then incorporated into the solution and the residual compatibility agent (16.00 parts of DPG in total) was added under agitation. The mixture has been allowed to cool at room temperature.

The liquid concentrate composition was stable.

## EXAMPLE 11

2 parts of fluoroglycofen ethyl (approx. 88% technical material) were dissolved in a mixture of 10 parts of Genamin CO20 and 7 parts of Dodigen 226 (cocoalkyldimethylbenzyl ammonium chloride) at a temperature about 65°C. Thereafter, 6 parts cyclohexanone were added under agitation and 67 parts of a 62% solution of glyphosate isopropylamine salt were incorporated into the solution. 8 parts of DPG were then added and the mixture allowed to cool. The composition was stable at normal temperatures.

## Example 12

The same procedure as in Example 1 was followed and the stable liquid concentrate formulation having the following composition was obtained :

| | |
|---|---|
| IPA salt of glyphosate (62% solution) | 67.00 |
| Oxyfluorfen (95% tech. material) | 1.85 |
| surfactant mix of Example 1 | 12.00 |
| Solvesso 150 | 8.15 |
| DPG | 11.00 |
| | 100.00 |

Solvesso 150 (tradename) is an aromatic hydrocarbon solvent ex Exxon Chemicals, having a more than 99% by weight aromatic content.

## Example 13

In following the same procedure as in Example 1 a liquid stable concentrate composition was obtained, having the following ingredients :

| | |
|---|---|
| IPA salt of glyphosate (62% solution) | 67.00 |
| Oxyfluorfen (95% tech. material) | 1.85 |
| Surfactant mix of example 1 | 12.00 |
| Exxate 600 | 8.15 |
| DPG | 11.00 |
| | 100.00 |

Exxate 600 (tradename) is an oxygenated hydrocarbon solvent from Exxon Chemicals.

## Example 14

In following the same procedure as in Example 1, a liquid stable concentrate composition was obtained, having the following composition :

9

| | |
|---|---|
| IPA salt of glyphosate (62% solution) | 40.52 (18.84 a.e.) |
| Oxyfluorfen (min. 95% technical mat.) | 0.99 |
| Genamin CO20 | 6.09 |
| Empigen OB | 28.03 |
| Cyclohexanone | 6.09 |
| DPG | 18.28 |
| | 100.00 |

## Example 15

Following essentially the procedure of Example 1, 1.85 parts of acifluorfen (81.4% technical material from Rohm & Haas) were heated at approximately 50°C and dissolved in 12.00 parts of the surfactant mix prepared in Example 1. Thereafter 8.15 parts of cyclohexanone are added and the solution is stirred. 67.00 parts of a 62% solution of glyphosate isopropylamine salt were then incorporated into the solution and the compatibility agent (11.00 parts of DPG) was added under agitation. The mixture has been allowed to cool at room temperature and a stable liquid concentrate composition was obtained.

## EXAMPLE 16

Another formulated composition according to the present invention has the following composition of materials :

| | |
|---|---|
| IPA salt of glyphosate (62% solution) | 47.0 (22.8 a.e.) |
| Oxyfluorfen (70% technical material) | 1.5 |
| Cyclohexanone | 4.0 |
| N-methylpyrrolidone | 3.0 |
| bis(polyoxyethylene)alkyl methyl amonium chloride | 7.2 |
| bis(polyoxyethylene)alkyl amine | 1.2 |
| polyoxyethylene alkyl phenyl ether | 1.2 |
| propylene glycol | 2.4 |
| diethylene glycol monobutyl ether | 18.0 |
| water | 14.5 |
| | 100.00 |

## EXAMPLE 17

Three other compositions were prepared according to the present invention.

| | %w/w | %w/w | %w/w |
|---|---|---|---|
| IPA salt of glyphosate(62%) | 67.00 | 67.00 | 67.00 |
| oxyfluorfen, 95% | 1.85 | 0.67 | 0.45 |

(continued)

|  | %w/w | %w/w | %w/w |
|---|---|---|---|
| Genamin C-020 | 6.50 | 6.50 | 6.50 |
| Dodigen 226 | 4.50 | 4.50 | 4.50 |
| Cyclohexanone solvent | 7.50 | 7.50 | 7.50 |
| Butyl Carbitol | 7.50 | 7.50 | 7.50 |
| DPG | 5.15 | 6.33 | 6.55 |
|  | 100.00 | 100.00 | 100.00 |

**Claims**

1. Liquid concentrate herbicidal composition comprising :

   - at least about 15 % by weight based on the total composition of N-phosphonomethylglycine or of a salt thereof or of a mixture of salts thereof (calculated as acid equivalent);
   - a water-insoluble diphenyl ether type of herbicide in the ratio by weight of N-phosphonomethylglycine a.e. / diphenyl ether of from 10/1 to 100/1.
   - 5 to 25% by weight of a surface active component, comprising a mixture of an alkoxylated fatty amine with one or more surface active materials selected from alkyl benzene sulfonates and alkyl naphthalene sulfonates, sulfated fatty alcohols, amines or acid amides, amine oxides, esters of sodium sulfosuccinate, sulfated or sulfonated fatty acid esters, petroleum sulfonates, sulfonated vegetable oils, ditertiary acetylenic glycols, polyoxyethylene derivatives of alkylphenols (particularly isooctylphenol and nonylphenol) and polyoxyethylene derivatives of the monoghigher fatty acid esters of hexitol anhydrides (e.g., sorbitan), alkoxylated quaternary ammonium surfactants, alkylpolyglycosides, alkoxylated alcohol surfactants, alkoxylated fatty acid esters, sucrose esters possibly alkoxylated, silicon based surface active materials;
   - 0 - 10% by weight (of total composition) of a solvent selected from hydrocarbon solvents, like paraffins, cycloparaffins, olefins, cycloolefins, aromatics or terpenes, halogenated hydrocarbons, nitroparaffins, organic sulfur compounds, aldehydes, ethers, ketones, acids, amines, like alkylamines, alkylene diamines, alkanol amines, aryl amines, imines, amides, nitriles and heterocyclic compounds, esters, like formates, acetates, propionates, acrylates or methacrylates, oxalates, benzoates, carbonates, phthalates, phosphates or phosphites, oxygenated hydrocarbons and silicates, the surface active component, with admixture of the solvent as appropriate being capable of dissolving the diphenyl ether herbicide; and
   - 1 to 25% by weight of a compatibility agent selected from monohydric and polyhydric alcohols and glycols, like isopropanol, diethylene glycol (DEG), dipropylene glycol (DPG), monopropylene glycol (MPG), low molecular weight polypropylene glycols (PPG's) and butoxyethoxy ethenol, and glycol ethers;
   - water to total 100%

2. Liquid concentrate herbicidal composition according to claim 1 which comprises at least 20% by weight of total composition of N-phosphonomethylglycine or of a salt thereof or of a mixture of salts thereof, calculated as acid equivalent.

3. Liquid concentrate herbicidal composition according to any of claims 1 or 2 wherein the weight ratio glyphosate acid equivalent to diphenyl ether is of from 18/1 to 72/1, preferably, 18/1, 48/1 or 72/1.

4. Liquid concentrate herbicidal composition according to any preceding claim characterized in that the surfactant component is a mixture of an alkoxylated fatty amine and of an optionally alkoxylated quaternary ammonium salt.

5. A process for the preparation of a liquid concentrate herbicidal composition according to any of claims 1-4, comprising the steps of :

   (a) preparing a solution of the diphenyl ether herbicide in a surface active component as defined in Claim 1 at a temperature in the range of from 20 to 80°C;
   (b) adding a solvent as defined in Claim 1, and optionally at least part of a compatibility agent as defined in Claim 1, and homogenizing the solution;

(c) adding N-phosphonomethylglycine or a salt thereof, optionally in aqueous solution, and

(d) adding the rest of the compatibility agent, by agitating the resulting mixture and, if appropriate, allowing it to cool; or alternatively,

(a') preparing a solution of the diphenyl ether herbicide in the surface active component as defined in Claim 1 at a temperature in the range of from 20 to 80°C

(b') adding at least part of a compatibility agent as defined in Claim 1 and homogenizing the resulting mixture;

(c') adding N-phosphonomethylglycine or a salt thereof, or a mixture of salts, optionally in aqueous solution and

(d') optionally adding the rest of the compatibility agent, by agitating the resulting mixture and if appropriate allowing it to cool; or alternatively

(a") preparing a solution of the diphenyl ether herbicide in a solvent as defined in Claim 1 or in a mixture of solvent and at least part of the surface active component as defined in Claim 1, at approximately ambient temperature;

(b") optionally adding the surface active component or part thereof, as appropriate, and at least part of the compatibility agent as defined in Claim 1 and homogenizing the resulting mixture;

(c") adding N-phosphonomethylglycine or a salt thereof, optionally as an aqueous solution, and

(d") optionally adding the rest of the compatibility agent as defined in Claim 1 by agitating the resulting mixture.

6. Process according to claim 5 wherein the solution of diphenyl ether herbicide is prepared by mixing the surfactant(s) with molten diphenyl ether herbicide or by stirring the diphenyl ether herbicide in the surfactant mixture, optionally at elevated temperature.

7. Process according to claim 5 or 6 wherein the glyphosate herbicide is incorporated into the product as glyphosate acid or as a salt thereof, preferably the isopropylamine salt, or as a mixture of different salts, or the glyphosate is incorporated in its acid form with a suitable acid acceptor selected from ammonia, ammonium acetate, ammonium carbonate, ammonium bicarbonate, sodium acetate, potassium acetate, sodium bicarbonate, sodium carbonate, sodium metaborate, sodium citrate, tetrasodium EDTA, sodium formate, sodium hydroxide, sodium oxalate, trisodium phosphate, tripotassium phosphate, sodium propionate, sodium pyrophosphate, sodium metasilicate, sodium orthosilicate, sodium sulfite, sodium thiosulfate, sodium tetraborate, dipotassium phosphate, diammonium phosphate, sodium tripolyphosphate, sodium metaphosphate.

8. A method of killing or controlling unwanted vegetation by applying to the plant to be killed or controlled an effective amount of the composition of any of claims 1 - 4 or as obtained according to the process of any of claims 5 - 7.

**Patentansprüche**

1. Flüssige konzentrierte herbizide Zusammensetzung, umfassend:

- mindestens etwa 15 Gew.-%, bezogen auf die gesamte Zusammensetzung, N-Phosphonomethylglycin oder ein Salz hiervon oder eine Mischung von Salzen hiervon (berechnet als Säureäquivalent);
- ein wasserunlösliches Herbizid vom Diphenylethertyp Im Gewichtsverhältnis von N-Phosphonomethylglycin a.e. / Diphenylether von 10/1 bis 100/1:
- 5 bis 25 Gew.-% einer oberflächenaktiven Komponente, umfassend eine Mischung aus einem alkoxylierten Fettamin mit einem oder mehreren oberflächenaktiven Materialien, gewählt aus Alkylbenzolsulfonaten und Alkylnaphthalinsulfonaten, sulfatierten Fettalkoholen. Aminen oder Säureamiden, Aminoxiden, Estern von Natriumsulfosuccinaten, sulfatierten oder sulfonierten Fettsäurestern, Petroleumsulfonaten, sulfonierten Pflanzenölen, ditertiären acetylenischen Glykolen, Polyoxyethylenderivaten von Alkylphenolen (insbesondere Isooctylphenol und Nonylphenol) und Polyoxyethylenderivaten von monohöheren Fettsäureestern von Hexitolanhydriden (z.B. Sorbitan), alkoxylierten quaternären Ammonium-Tensiden, Alkylpolyglykosiden, alkoxylierten Alkohol-Tensiden, alkoxylierten Fettsäureestern. gegebenenfalls alkoxylierten Saccharoseestern, oberflächenaktiven Materialen auf Siliciumbasis;
- 0 bis 10 Gew.-% (der gesamten Zusammensetzung) eines Lösungsmittels. gewählt aus Kohlenwasserstofflösungsmitteln, wie Paraffine, Cycloparaffine, Olefine, Cycloolefine, aromatische Substanzen oder Terpene, halogenierte Kohlenwasserstoffe, Nitroparaffine, organische Schwefelverbindungen, Aldehyde, Ether, Ketone, Säuren, Amine, wie Alkylamine, Alkylendiamine, Alkanolamine, Arylamine, Imine, Amide, Nitrile und heterocyclische Verbindungen, Ester, wie Formiate, Acetate, Propionate. Acrylate oder Methacrylate, Oxalate, Benzoate, Carbonate, Phthalate, Phosphate oder Phosphite, oxygenierte Kohlenwasserstoffe und Silicate, wobei die oberflächenaktive Komponente in Vermischungen mit dem geeigneten Lösungsmittel in der Lage ist, das Diphenylether-Herbizid zu lösen: und

- 1 bis 25 Gew.-% eines Kompatibilisierungsmittels, gewählt aus einwertigen und mehrwertigen Alkoholen und Glykolen, wie Isopropanol, Diethylenglykol (DEG), Dipropylenglykol (DPG), Monopropylenglykol (MPG). niedermolekulargewichtige Polypropylenglykole (PPG's) und Butoxyethoxyethanol und Glykolether:
- Wasser auf Insgesamt 100 %.

2. Flüssige konzentrierte herbizide Zusammensetzung nach Anspruch 1, umfassend mindestens 20 Gew.-% der gesamten Zusammensetzung an N-Phosphonomethylglycin oder eines Salzes hiervon oder einer Mischung von Salzen hiervon, berechnet als Säureäquivalent.

3. Flüssige konzentrierte herbizide Zusammensetzung nach Anspruch 1 und/oder 2, wobei das Gewichtsverhältnis von Glyphosat-Säureäquivalent zu Diphenylether 18/1 bis 72/1, vorzugsweise 18/1, 48/1 oder 72/1, beträgt.

4. Flüssige konzentrierte herbizide Zusammensetzung nach mindestens einem der vorangehenden Ansprüche, dadurch gekennzeichnet, daß die Tensid-Komponente eine Mischung aus einem alkoxylierten Fettamin und aus einem wahlweise alkoxylierten quaternären Ammoniumsalz ist.

5. Verfahren zur Herstellung einer flüssigen konzentrierten herbiziden Zusammensetzung nach mindestens einem der Ansprüche 1-4, umfassend die Schritte:

(a) Herstellen einer Lösung des Diphenylether-Herbizids in einer oberflächenaktiven Komponente, wie in Anspruch 1 definiert, bei einer Temperatur im Bereich von 20 bis 80°C;
(b) Zugeben eines Lösungsmittels, wie in Anspruch 1 definiert, und wahlweise mindestens eines Teils eines Kompatibilisierungsmittels, wie in Anspruch 1 definiert, und Homogenisieren der Lösung,
(c) Zugeben von N-Phosphonomethylglycin oder eines Salzes hiervon, wahlweise in wäßriger Lösung, und
(d) Zugeben des Restes des Kompatibilisierungsmittels durch Bewegen der resultierenden Mischung und, falls zweckdienlich, Abkühlenlassen: oder alternativ
(a') Herstellen einer Lösung des Diphenylether-Herbizids in der oberflächenaktiven Komponente, wie in Anspruch 1 definiert, bei einer Temperatur im Bereich von 20 bis 80°C;
(b') Zugeben mindestens eines Teils eines Kompatibilisierungsmittels, wie in Anspruch 1 definiert, und Homogenisieren der resultierenden Mischung;
(c') Zugeben von N-Phosphonomethylglycin oder eines Salzes hiervon oder einer Mischung von Salzen, wahlweise in wäßriger Lösung; und
(d') wahlweise Zugeben des Restes des Kompatibilisierungsmittels, durch Bewegen der resultierenden Mischung und, falls zweckdienlich. Abkühlenlassen; oder alternativ
(a") Herstellen einer Lösung des Diphenylether-Herbizids in einem Lösungsmittel, wie in Anspruch 1 definiert, oder in einer Mischung aus Lösungsmittel und mindestens einem Teil der oberflächenaktiven Komponente, wie in Anspruch 1 definiert, bei etwa Umgebungstemperatur;
(b") wahlweise Zugeben der oberflächenaktiven Komponente oder eines Teils hiervon, wie zweckdienlich, und mindestens eines Teils des Kompatibilisierungsmittels, wie in Anspruch 1 definiert, und Homogenisieren der resultierenden Mischung;
(c") Zugeben von N-Phosphonomethylglycin oder eines Salzes hiervon, wahlweise in einer wäßrigen Lösung; und
(d") wahlweise Zugeben des Restes des Kompatibilisierungsmittels, wie in Anspruch 1 definiert, durch Bewegen der resultierenden Mischung.

6. Verfahren nach Anspruch 5, wobei die Lösung von Diphenylether-Herbizid durch Mischen des (der) Tensids (e) mit geschmolzenem Diphenylether-Herbizid oder durch Rühren des Diphenylether-Herbizids in der Tensidmischung, wahlweise bei erhöhter Temperatur, hergestellt wird.

7. Verfahren nach Anspruch 5 oder 6, wobei das Glyphosat-Herbizid in das Produkt als Glyphosatsäure oder als ein Salz hiervon, vorzugsweise als Isopropylaminsalz, oder als eine Mischung von verschiedenen Salzen, eingebracht wird, oder das Glyphosat in seiner Säureform mit einem geeigneten Säureakzeptor, gewählt aus Ammoniak, Ammoniumacetat, Ammoniumcarbonat, Ammoniumbicarbonat, Natriumacetat, Kaliumacetat, Natriumbicarbonat, Natriumcarbonat, Natriummetaborat, Natriumcitrat, Tetranatrium-EDTA, Natriumformiat, Natriumhydroxid. Natriumoxalat, Trinatriumphosphat, Trikaliumphosphat, Natriumpropionat, Natriumpyrophosphat, Natriummetasilicat, Natriumorthosilicat, Natriumsulfit, Natriumthiosulfat, Natriumtetraborat, Dikaliumphosphat, Diammoniumphosphat, Natriumtripolyphosphat, Natriummetaphosphat, eingebracht wird.

8. Verfahren zum Abtöten oder Bekämpfen unerwünschter Vegetation durch Aufbringen auf die abzutötende oder zu bekämpfende Pflanze einer wirksamen Menge der Zusammensetzung nach mindestens einem der Ansprüche 1-4 oder wie gemäß dem Verfahren nach mindestens einem der Ansprüche 5-7 erhalten.

**Revendications**

1. Composition herbicide liquide sous forme de concentré comprenant :

   - au moins environ 15 % en poids, par rapport à la composition totale, de N-phosphonométhylglycine ou d'un sel de celle-ci ou d'un mélange de sels de celle-ci (exprimé en équivalent d'acide);
   - un herbicide de type éther-oxyde de diphényle insoluble dans l'eau en un rapport pondéral e.a. (équivalent d'acide) de N-phosphonométhylglycine/éther-oxyde de diphényle de 10/1 à 100/1;
   - 5 à 25 % en poids d'un composant tensio-actif comprenant un mélange d'une amine grasse alcoxylée avec un ou plusieurs matériaux tensio-actifs choisis parmi des alkylbenzènesulfonates et des alkylnaphtalènesulfonates, des alcools gras sulfatés, des amines ou des amides d'acides, des oxydes d'amines, des esters de sulfosuccinate de sodium, des esters d'acides gras sulfatés ou sulfonés, des sulfonates de pétrole, des huiles végétales sulfonées, des glycols acétyléniques ditertiaires, des dérivés polyoxyéthyléniques d'alkylphénols (particulièrement d'isooctylphénol et de nonylphénol) et des dérivés polyoxyéthyléniques des monoesters d'acides gras supérieurs d'anhydrides d'hexitol (par exemple le sorbitane), des agents tensio-actifs de type composé d'ammonium quaternaire alcoxylé, des alkylpolyglycosides, des agents tensio-actifs de type alcool alcoxylé, des esters d'acides gras alcoxylés, des esters de sucrose éventuellement alcoxylés, des matériaux tensio-actifs à base de silicium;
   - 0 à 10 % en poids (de la composition totale) d'un solvant choisi parmi des solvants hydrocarbonés, comme des paraffines, des cycloparaffines, des oléfines, des cyclooléfines, des composés aromatiques ou des terpènes, des hydrocarbures halogénés, des nitroparaffines, des composés organiques du soufre, des aldéhydes, des éthers, des cétones, des acides, des amines, comme des alkylamines, des alkylènediamines, des alcanolamines, des arylamines, des imines, des amides, des nitriles, et des composéS hétérocycliques, des esters, comme des formiates, des acétates, des propionates, des acrylates ou des méthacrylates, des oxalates, des benzoates, des carbonates, des phtalates, des phosphates ou des phosphites, des hydrocarbures oxygénés et des silicates, le composant tensio-actif, si nécessaire en mélange avec le solvant, étant capable de dissoudre l'herbicide de type éther-oxyde de diphényle; et
   - 1 à 25 % en poids d'un agent améliorant la compatibilité choisi par des monoalcools et des polyols et des glycols, comme l'isopropanol, le diéthylèneglycol (DEG), le dipropylèneglycol (DPG), le monopropylèneglycol (MPG), des polypropylèneglycols de faible masse moléculaire (PPG) et un butoxyéthoxyéthénol, et des éthers-oxydes de glycols;
   - de l'eau jusqu'à un total de 100 %.

2. Composition herbicide liquide sous forme de concentré selon la revendication 1, qui comprend au moins 20 % en poids de la composition totale de N-phosphonométhylglycine ou d'un sel de celle-ci ou d'un mélange de sels de celle-ci, exprimé en équivalent d'acide.

3. Composition herbicide liquide sous forme de concentré selon l'une quelconque des revendications 1 ou 2, dans laquelle le rapport pondéral de l'équivalent acide du glyphosate à l'éther-oxyde diphénylique vaut de 18/1 à 72/1, et de préférence 18/1, 48/1 ou 72/1.

4. Composition herbicide liquide sous forme de concentré selon l'une quelconque des revendications précédentes, caractérisée en ce que le composant tensioactif est un mélange d'une amine grasse alcoxylée et d'un sel d'ammonium quaternaire facultativement alcoxylé.

5. Procédé de préparation d'une composition herbicide liquide sous forme de concentré selon l'une quelconque des revendications 1 à 4, comprenant les étapes consistant à :

   (a) préparer une solution de l'herbicide de type éther-oxyde de diphényle dans un composant tensio-actif selon la revendication 1 à une température dans la gamme de 20 à 80°C;
   (b) ajouter un solvant selon la revendication 1, et facultativement au moins une partie d'un agent améliorant la compatibilité selon la revendication 1, et homogénéiser la solution;
   (c) ajouter de la N-phosphonométhylglycine ou un sel de celle-ci, facultativement en solution aqueuse, et
   (d) ajouter le reste de l'agent améliorant la compatibilité, en agitant le mélange de résultant et, si nécessaire, en le laissant refroidir; ou en variante

(a') préparer une solution de l'herbicide de type éther-oxyde de diphényle dans le composant tensio-actif selon la revendication 1, à une température dans la gamme de 20 à 80°C;

(b') ajouter au moins une partie d'un agent améliorant la compatibilité selon la revendication 1 et homogénéiser le mélange résultant;

(c') ajouter de la N-phosphonométhylglycine ou un sel de celle-ci, ou un mélange de sels, facultativement en solution aqueuse, et

(d') ajouter facultativement le reste de l'agent améliorant la compatibilité en agitant le mélange résultant et, si nécessaire, en le laissant refroidir; ou en variante

(a") préparer une solution de l'herbicide de type éther-oxyde diphénylique dans le solvant selon la revendication 1 ou dans un mélange de solvant et d'au moins une partie du composant tensioactif selon la revendication 1, approximativement à la température ambiante;

(b") ajouter facultativement le composant tensioactif ou une partie de celui-ci, si nécessaire, et au moins une partie de l'agent améliorant la compatibilité selon la revendication 1 et homogénéiser le mélange résultant;

(c") ajouter de la N-phosphonométhylglycine ou un sel de celle-ci, facultativement en solution aqueuse, et

(d") ajouter facultativement le reste de l'agent améliorant la compatibilité selon la revendication 1, en agitant le mélange résultant.

6. Procédé selon la revendication 5, dans lequel on prépare la solution de l'herbicide de type éther-oxyde de diphényle en mélangeant le ou les agents tensio-actifs avec l'herbicide de type éther-oxyde de diphényle fondu ou en agitant l'herbicide de type éther-oxyde de diphényle dans le mélange d'agents tensio-actifs, facultativement à température élevée.

7. Procédé selon la revendication 5 ou 6, dans lequel on incorpore l'herbicide de type glyphosate dans le produit sous la forme du glyphosate acide ou d'un sel de celui-ci, de préférence le sel d'isopropylamine, ou sous la forme de différents sels, ou on incorpore le glyphosate sous sa forme acide avec un accepteur de protons approprié choisi parmi l'ammoniac, l'acétate d'ammonium, le carbonate d'ammonium, le bicarbonate d'ammonium, l'acétate de sodium, l'acétate de potassium, le bicarbonate de sodium, le carbonate de sodium, le métaborate de sodium, le citrate de sodium, l'EDTA tétrasodique, le formiate de sodium, l'hydroxyde de sodium, l'oxalate de sodium, le phosphate trisodique, le phosphate tripotassique, le propionate de sodium, le pyrophosphate de sodium, le métasilicate de sodium, l'orthosilicate de sodium, le sulfite de sodium, le thiosulfate de sodium, le tétraborate de sodium, le phosphate dipotassique, le phosphate diammonique, le tripolyphosphate de sodium, le métaphosphate de sodium.

8. Procédé pour tuer ou lutter contre la végétation indésirable par application à la plante que l'on veut tuer ou contre laquelle on veut lutter d'une quantité efficace de la composition selon l'une quelconque des revendications 1 à 4 telle qu'obtenue conformément au procédé selon l'une quelconque des revendications 5 à 7.